# EUROPÄISCHE PATENTSCHRIFT

(11) **EP 2 942 173 B1**
(45) Veröffentlichungstag und Bekanntmachung des Hinweises auf die Patenterteilung: **20.12.2017**
(21) Anmeldenummer: 14167364.0
(22) Anmeldetag: 07.05.2014
(51) Int. Cl.: B29B 17/00

(54) **Verfahren zur Herstellung von Granulat zum Spritzgießen eines Formteils**
Method for the preparation of granulate for injection moulding a moulded part
Procédé de fabrication de granulé pour moulage par injection d'une pièce moulée

(43) Veröffentlichungstag der Anmeldung: 11.11.2015
(73) Patentinhaber: Gutta Werke AG, 8345 Adetswil (CH)
(72) Erfinder: Marti, Silvio, 8640 Rapperswil/SG (CH)
(74) Vertreter: Durm Patentanwälte PartG mbB

(56) Entgegenhaltungen:
- EP-A1- 1 776 006
- EP-A1- 2 123 418
- EP-A1- 2 463 071
- EP-A2- 0 493 720
- DE-A1- 10 149 515
- DE-A1-102012 008 595
- N.N.: "PALLMANN Kunststoffe Agglomerieren", , 3 April 2008 (2008-04-03), pages 1-12, XP055326729, Retrieved from the Internet: URL:http://www.pallmann.eu/language/upload /pdf/K_650_DE_Agglomerieren.pdf [retrieved on 2016-12-07]

## Beschreibung

Die Erfindung betrifft ein Verfahren zur Herstellung von Granulat zum Spritzgießen eines Formteils aus Restabfall, der beim Recyceln von Verpackungen aus Verbundmaterial, insbesondere Getränkekartons, anfällt.

Aus leeren Getränkekartons lassen sich Papierfasern zurückgewinnen, die beispielsweise für die Wellpappenherstellung benutzt werden können. Bei diesem Recyclingprozess verbleiben Restabfälle, sogenannte Rejekte, die im Wesentlichen aus einem Verbund von thermoplastischem Kunststoff und Aluminiumfolie bestehen. Ein Auflösen dieses Verbunds und Rückgewinnung der einzelnen Komponenten, also Kunststoff und Aluminium, ist technisch nur sehr aufwendig möglich. Daher werden die Restabfälle einfach als Ganzes als Zuschlagstoff eingesetzt, beispielsweise bei der Zementherstellung. Eine weitere Verwendungsmöglichkeit besteht darin, die Restabfälle klein zu schnipseln, zu waschen, zu trocknen und heiß zu Platten oder flächigen Formstücken zu verpressen. Die so gewonnenen bunten Platten können, ähnlich wie Holz, zu Böden, Möbeln oder anderen, kleineren und größeren Gebrauchsgegenständen weiterverarbeitet werden. Aus flachen Platten lassen sich allerdings nur ganz bestimmte geometrische Formen herstellen. Die Gestaltungsfreiheit bei der Herstellung von Möbeln und anderen Gebrauchsgegenständen ist deshalb stark eingeschränkt.

EP 0 493 720 A2 beschreibt ein Verfahren zur Wiederaufbereitung von gebrauchten, zweiseitig kunststoffbeschichteten Getränkekartons. Der Getränkekarton wird zuerst zerkleinert. Die kleinen Flächenstücke werden anschließend in wässriger Suspension aufgelöst, wobei sich die die Außenflächen der Flächenstücke bildenden Thermoplastteile in das Suspension von dem Trägermaterial weitgehend verselbständigen. Es folgt das Trennen der Suspension aus Thermoplastteilen und Faserstoffen in eine erste Fraktion von Faserstoffen und eine zweite Fraktion von im Wesentlichen Thermoplastteilen. Die zweite Fraktion aus Thermoplastteilen wird entwässert und kann unmittelbar einer Weiterverarbeitung zugeführt oder in ein Thermoplastgranulat überführt werden. Enthält die zweite Fraktion aus Thermoplastteilen solche, die eine Aluminiumeinlage aufweisen, können diese von den im Wesentlichen reinen Thermoplastteilchen in eine spezielle Fraktion von aluminiumhaltigen Thermoplastteilchen getrennt werden.

EP 2 463 071 A1 beschreibt ein Verfahren zur Aufbereitung von Abfällen aus Tetra-Pak-Behältern, welche 18 Prozent Aluminium enthalten. Nach Zerkleinerung und Reinigung werden die Abfallstücke entweder durch Extrusion oder durch Agglomeration in Granulat überführt. Das so gewonnene Granulat kann dann zusammen mit additiven Komponenten in einem Injektions-Kompressions-Prozess zu Plastikteilen weiterverarbeitet werden.

EP 1 776 006 A1 beschreibt die Herstellung eines Kunststoff-Formteils aus recyceltem Reject-Material mit einem Aluminium-Anteil von 15 bis 20 Prozent, zum Beispiel aus der DSD-Getränkekarton-Verwertung. Das recycelte Reject-Material liegt vor der Herstellung des Formteils durch Extrudieren oder Spritzgießen in geschredderter und granulierter Form vor.

Das im Internet gefundene Dokument "PALLMANN Kunststoffe agglomerieren" beschreibt einen Plast-Agglomerator zur Verarbeitung von Thermoplast-Produktionsabfällen sowie Verbundmaterialien zu rieselfähigem Granulat. Das Aufgabematerial wird mit einer Zuführschnecke in die Agglomerierkammer gefördert. Friktionswärme und hoher Druck, erzeugt zwischen Agglomerierflügel und einer Lochmatrize, agglomerieren das Material und pressen es durch die Speziallochung in der Matrize aus. Das durch die Matrize austretende Material wird von umlaufenden Messern abgeschnitten und mit der Kühlluft eines Ventilators direkt vom Agglomerator in einen Heiß-Granulator gefördert. Hier erfolgt die Zerkleinerung zu einem gleichmäßigen Granulat.

Es ist Aufgabe der vorliegenden Erfindung, ein verbessertes Verfahren zu finden, mit dem speziell Restabfälle bzw. Rejecte, die aus einem Verbund von thermoplastischem Kunststoff und Aluminiumfolie bestehen, in einem kontinuierlichen Prozess zu einem Regenerat aufbereitet werden können, welches zur Herstellung von Formteilen durch Spritzgießen verwendbar ist.

Gelöst wird die Aufgabe durch die im Patentanspruche 1 angegebene Abfolge von Verfahrensschritten.

In einem ersten Verfahrensschritt wird der aus einem Verbund von thermoplastischem Kunststoff und Aluminium bestehende Restabfall zu Schnipseln mit einer Größe von 5 bis 20 mm zerkleinert. Dadurch werden die ungleichmäßig großen Abfallstücke auf eine definierte Größe gebracht, die für die Verarbeitung in den Folgeprozessen geeignet ist.

In einem zweiten Verfahrensschritt werden die Restabfall-Schnipsel zu einem zusammenhängenden Materialstrang agglomeriert. Hierzu durchlaufen die Schnipsel einen Agglomerator, in dem sie mittels zweier gegenläufig drehender Schnecken in Richtung Ausgang gefördert, komprimiert und durch eine Lochplatte/Matrix gedrückt werden. Dabei erwärmt sich der thermoplastische Kunststoff derart, dass er erweicht und die Restabfallstücke zu einem Materialstrang zusammengepresst werden.

In einem dritten Verfahrensschritt wird der Materialstrang in Strangabschnitte zerschnitten. Dies kann beispielsweise mittels einer Mühle erfolgen. Die Strangabschnitte weisen erfindungsgemäß eine Länge von 1 bis 5 cm auf. Das Zerschneiden dient als Vorbereitung für die folgenden weiteren Verfahrensschritte.

Direkt nach dem Agglomerieren weist der Materialstrang eine teigähnliche Konsistenz auf, was eine weitere Verarbeitung erschwert. Die Strangabschnitte werden deshalb zunächst abgekühlt, wodurch sie fest werden und somit leichter bearbeitet werden können. Das Abkühlen erfolgt durch Zuführen von kühler Luft, beispielsweise mittels eines Gebläses, und mithilfe eines Wasserbads. Durch das vorherige Zerschneiden des Materialstrangs in kurze Abschnitte wird das Abkühlen stark erleichtert.

In einem abschließenden Verfahrensschritt werden die abgekühlten Strangabschnitte so zerkleinert, dass ein Granulat mit einer Korngröße von 6 bis 10 mm entsteht. Aus dem so gewonnenen Granulat können Formteile im Spritzgussverfahren hergestellt werden. Um die Eignung des Granulats zum Spritzgießen zu gewährleisten, müssen die darin enthaltenen Stücke von Aluminiumfolie so klein sein, dass sie die Düsen und Kanäle der Spritzgussmaschine nicht verstopfen.

Besonders bevorzugt wird der Restabfall zu Schnipseln mit einer Größe von 10 bis 15 mm, weiter bevorzugt in einer Größe von ungefähr 12 mm zerkleinert. Diese Größe ist für die weitere Verarbeitung gut geeignet.

Es ist erfindungsgemäß, dass der thermoplastische Kunststoff in den Restabfall-Schnipseln während des Agglomerierens teilweise verflüssigt wird, so dass ein zusammenhängender Materialstrang entsteht. Insbesondere wird der thermoplastische Kunststoff oberflächlich verflüssigt, so dass sich die einzelnen Kunststoffpartikel an ihren Oberflächen verbinden.

Vorteilhaft beträgt die Temperatur des Restabfalls während des Agglomerierens zwischen 130°C und 160°C, bevorzugt zwischen 140°C und 150°C, insbesondere ca. 145°C. Die Temperatur wird derart gewählt, dass sich der thermoplastische Kunststoff zwar stellenweise verflüssigt, jedoch keine thermische Zersetzung einsetzt. Die genannten Temperaturbereiche werden erreicht, wenn spezielle Verbunde von thermoplastischem Kunststoff und Aluminiumfolie, die beim Recyceln von Getränkekartons anfallen, verwendet werden.

Kommen andere Verbunde von thermoplastischem Kunststoff und Aluminiumfolie als solche, die beim Recyceln von Getränkekartons anfallen, zum Einsatz, kann die Temperatur des Restabfalls während des Agglomerierens bis 200°C, bevorzugt um 180°C betragen. Die Temperatur ist also deutlich höher. Diese anderen Verbunde können entweder sortenrein zur Herstellung von Granulat verwendet werden den Verbunden aus recycelten Getränkekartons beigemischt werden.

Vorteilhafterweise hat der Materialstrang einen Restfeuchtegehalt von 0 bis 10 Prozent, bevorzugt von 0 bis 2 Prozent, besonders bevorzugt circa 0,2 Prozent. Im Rahmen der vorliegenden Anmeldung bedeutet ein Restfeuchtegehalt von 0 Prozent, dass der Materialstrang trocken ist. Durch die Verwendung von Restabfall, der beim Recyceln von Getränkekartons prozessbedingt bereits gewaschen wurde, kann auf ein Waschen und aufwändiges Trocknen vor der Verarbeitung verzichtet werden. Der Restabfall hat zu Beginn des erfindungsgemäßen Verfahrens einen Feuchtegehalt von 20 bis 30 Prozent, der sich im Laufe des Verfahrens von selbst reduziert. Dies erfolgt unter anderem durch die Erwärmung des Restabfalls während des Agglomerierens und dem damit verbundenen teilweisen Verdampfen der Restfeuchte. Der Agglomerator muss natürlich derart ausgebildet sein, dass der Wasserdampf entweichen kann.

In einem weiteren optionalen Verfahrensschritt werden vor dem Zerkleinern des Restabfalls Eisen- und Nichteisenmetalle abgeschieden. Damit wird verhindert, dass das herzustellende Granulat solche Eisen- bzw. Nichteisenmetallpartikel enthält, die nicht verformbar sind. Derartige Partikel könnten nämlich beim Spritzgießen bis in die Spritzgussmaschine und das Werkzeug vordringen und dort Düsen und Schmelzkanäle verstopfen oder gar beschädigen. Allerdings werden nur solche Partikel erfasst und ausgesondert, die überwiegend aus Eisen- oder Nichteisenmetall, beispielsweise auch Aluminium, bestehen. Verbundmaterialien aus thermoplastischem Kunststoff und Aluminiumfolie sollen und können, maschinell bedingt, nicht ausgesondert werden. Daher sind solche Verbunde auch noch im herzustellenden Granulat enthalten.

Optional werden die Restabfall-Schnipsel nach dem Zerkleinern zwischengespeichert, um sie anschließend in einen kontinuierlichen Stoffstrom zur weiteren Bearbeitung zur Verfügung zu stellen. Durch die Zwischenspeicherung wird eine Art Puffer gebildet. Dadurch kann ein kontinuierlicher Stoffstrom den folgenden Verfahrensschritten zur Verfügung gestellt werden. Dies gewährleistet eine konstante Produktqualität bzw. konstante Produkteigenschaften.

Es ist zweckmäßig, dass das erhaltene Granulat homogenisiert und getrocknet wird, zum Beispiel in einem Mischsilo. Bevorzugt wird ein Restfeuchtegehalt des Granulats nahe 0 Prozent erreicht. Dadurch wird ein problemloses Verpacken, anschließendes Lagern und späteres Verarbeiten des trockenen Granulats ermöglicht. Die weitere Homogenisierung stellt sicher, dass das Granulat über eine einheitliche Korngröße verfügt, wodurch das Granulat in einer Spritzgussmaschine gleichmäßig plastifiziert, d.h. geschmolzen, werden kann.

Aus dem gewonnenen Granulat kann ein Formteil hergestellt werden. Dabei wird eine Spritzgussmaschine verwendet, bei der das erneute Plastifizieren, d.h. das Schmelzen des Granulats, und das anschließende Einspritzen der plastischen oder zumindest teilweisen flüssigen Masse in die Spritzgussform mechanisch voneinander getrennt ist. Beispielsweise wird das Granulat in einem groben Extruder zunächst plastifiziert. Der Extruder befördert dann die plastische Masse über ein Kanal-Ventilsystem in die Spritzeinheit der Spritzgussmaschine, von wo aus sie in einem separaten Vorgang in das Werkzeug mechanisch gepresst bzw. gespritzt wird.

Da das für die Produktion des Formteils eingesetzte Granulat aus Restabfall sehr kostengünstig erzeugbar ist, kann das Formteil besonders billig hergestellt und angeboten werden. Bevorzugt werden derartige Formteile als nicht sichtbare Produkte mit Wandstärken ab 2 mm im Bausektor verwendet, zum Beispiel als Abdeckhauben oder verlorene Schalungen. Dadurch, dass das nach dem erfindungsgemäßen Verfahren erzeugte Granulat und damit auch die daraus hergestellten Formteile nicht allein aus Kunststoff bestehen, sondern überdies noch Stücke von Aluminiumfolie enthalten, haben diese Formteile eine höhere Festigkeit, insbesondere Bruchfestigkeit. Außerdem führt die eingelagerte Aluminiumfolie zu hübschen optischen Effekten.

Im Folgenden werden das erfindungsgemäße Verfahren zur Herstellung von Granulat zum Spritzgießen aus Restabfall sowie ein darauf aufbauendes Verfahren zur Herstellung eines Formteils durch Spritzgießen des erzeugten Granulats näher erläutert. Es zeigen:
- Figur 1: die Verfahrensschritte zur Herstellung eines Granulats aus Restabfall, schematisch;
- Figur 2: eine Spritzgussmaschine zur Herstellung eines Formteils aus dem gemäß Figur 1 erzeugten Granulat.

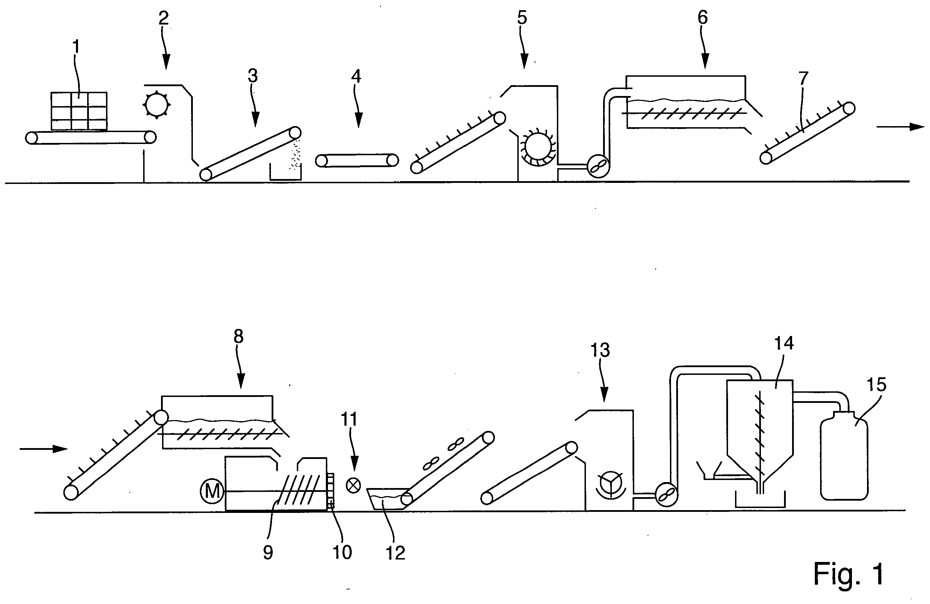

In Figur 1 ist zu erkennen, dass Restabfälle, die beim Recyceln von Getränkekartons anfallen, in Form von Ballen 1 dem erfindungsgemäßen Verfahren zugeführt werden. Diese Restabfälle bestehen im Wesentlichen aus einen Verbund von thermoplastischem Kunststoff und Aluminiumfolie. In einem ersten Schritt werden die Ballen 1 mithilfe eines Ballenöffners 2 geöffnet.

In einem zweiten Schritt durchläuft der Restabfall einen EisenMetallabscheider 3 und einen Nichteisen-Metallabscheider 4. Im EisenMetallabscheider 3 werden Eisenpartikel aus den Restabfällen abgeschieden. Im Nichteisen-Metallabscheider 4 werden kompakte Partikel aus Nichteisen-Metallen, darunter Kupfer, Messing und Aluminium, abgeschieden. Verbundmaterial aus Aluminiumfolie und thermoplastischen Kunststoff passiert den Nichteisen-Metallabscheider 4 ungehindert.

Mithilfe des Eisen-Metallabscheiders 3 und des Nichteisen-Metallabscheiders 4 wird verhindert, dass sich am Ende noch größere, nicht schmelz- und nicht verformbare Metallpartikel im Granulat befinden. Eine Spritzgussmaschine und ein entsprechendes Spritzgusswerkzeug werden so vor Verstopfung und/oder Beschädigung geschützt. Die im Granulat noch enthaltenen Stücke von Aluminiumfolie, die ja absichtlich nicht abgeschieden werden, sind für die Spritzgussmaschine ungefährlich.

In einem weiteren Verfahrensschritt wird der Restabfall mithilfe eine Schredders 5 zu Schnipseln mit einer Größe von 10 bis 15 mm zerkleinert. Dadurch wird der ungleichmäßig groß gestückelte Restabfall homogenisiert und auf eine einheitliche Größe gebracht. Diese ist derart gewählt, dass sie für die Verarbeitung in den Folgeprozessen optimal ist.

Im folgenden Verfahrensschritt wird der Restabfall in einem Zwischenspeicher 6 gespeichert und anschließend in einem kontinuierlichen Stoffstrom über ein Förderband 7 den weiteren Folgeprozessen zugeführt. Dabei dient der Zwischenspeicher 6 als Puffer.

Danach wird der Restabfall mithilfe eines Agglomerators 8 zu einem Materialstrang agglomeriert. Hierzu wird das Material im Agglomerator 8 durch zwei gegenläufig drehenden Schnecken 9 komprimiert. Durch die dabei entstehenden Druck- und Reibungseffekte wird das Material auf ca. 145 Grad Celsius erwärmt. Dadurch wird der thermoplastische Kunststoff zumindest an seinen Oberflächen verflüssigt, so dass die Restabfall-Schnipsel zusammenfließen und so ein endloser Materialstrang entsteht. Der plastische oder zähflüssige Materialstrang tritt durch eine Lochplatte oder Matrix 10 aus dem Agglomerator 8 aus.

Die maximale Temperatur während des Agglomerierens ist derart gewählt, dass keine thermische Zersetzung des thermoplastischen Kunststoffs einsetzt.

Durch die hohen Temperaturen des Restabfalls im Agglomerator 8 verdampft die in den Restabfall-Stücken noch vorhandene Restfeuchte, so dass der Materialstrang am Ende einen Restfeuchtegehalt von maximal 10 Prozent, bevorzugt von maximal 2 Prozent, hat.

Nach dem Agglomerator 8 wird der Materialstrang mittels einer ersten Mühle 11 grob in Strangabschnitte mit einer Länge von 1 bis 5 cm geschnitten. Diese werden dann in einem Wasserbad 12 und durch strömende Luft abgekühlt. Durch das Abkühlen erhärten die Strangabschnitte, was ein weiteres Zerkleinern ermöglicht.

Eine zweite Mühle 13 zerkleinert und homogenisiert die festen Strangabschnitte dann, so dass daraus Granulat mit einer mittleren Korngröße um 8 mm entsteht.

In einem weiteren Verfahrensschritt wird das Granulat in einem Mischsilo 14 zwischengespeichert, darin weiter homogenisiert und getrocknet. Im Mischsilo 14 wird ein Restfeuchtegehalt des Granulats nahe 0 Prozent erreicht

Zum Schluss wird das Granulat in so genannte "big bags" 15 gefüllt und abtransportiert. Wahlweise wird das Granulat gelagert oder direkt anschließend einer Spritzgussmaschine zugeführt.

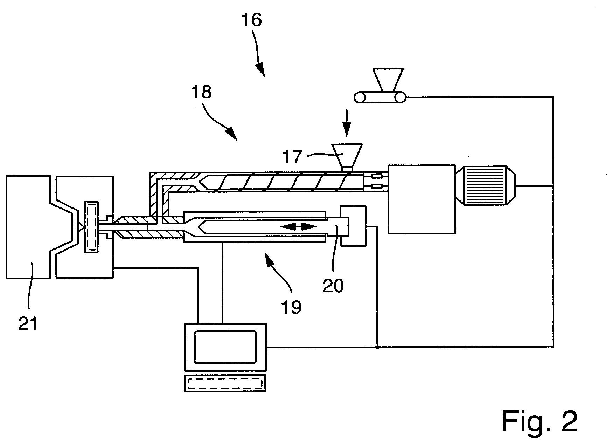

Figur 2 zeigt beispielhaft eine geeignete Spritzgussmaschine 16, mit der das erfindungsgemäß hergestellte Granulat zu Formteilen weiterverarbeitet wird. Hierzu wird das Granulat in einen Trichter 17 eingefüllt und dann in einer Extrudereinheit 18 vollständig plastifiziert. Eventuell im Granulat noch vorhandene Restfeuchte entweicht dabei vollständig.

Die Extrudereinheit 18 befördert das geschmolzene Granulat in eine Spritzeinheit 19, in der das Material mithilfe eines Kolbens 20 in einen Spritzgussform 21 gedrückt wird. Dabei sind der Vorgang des Plastifizierens in der Extrudereinheit 18 und das Spritzen des geschmolzenen Granulats durch die Spritzeinheit 19 voneinander getrennt.

### Abkürzungsverzeichnis

- 1: Ballen
- 2: Ballenöffner
- 3: Eisenmetallabscheider
- 4: Nichteisenmetallabscheider
- 5: Schredder
- 6: Zwischenspeicher
- 7: Förderband
- 8: Agglomerator
- 9: Schnecke (Agglomerator)
- 10: Lochplatte/Matrix
- 11: erste Mühle
- 12: Wasserbad
- 13: zweite Mühle
- 14: Mischsilo
- 15: big bag
- 16: Spritzgussmaschine
- 17: Trichter
- 18: Extrudereinheit
- 19: Spritzeinheit
- 20: Kolben
- 21: Spritzgussform

## Patentansprüche

1. Verfahren zur Herstellung von Granulat zum Spritzgießen eines Formteils aus Restabfall, der beim Recyceln von Verpackungen, insbesondere Getränkekartons, anfällt und im Wesentlichen aus einem Verbund von thermoplastischem Kunststoff und Aluminiumfolie besteht, mit den aufeinander folgenden Schritten:
- Zerkleinern des Restabfalls zu Schnipseln mit einer Größe von 5 bis 20 mm;
- Agglomerieren der Restabfall-Schnipsel bei einer Temperatur zwischen 130 Grad Celsius und 200 Grad Celsius zu einem zusammenhängenden Materialstrang, wobei der thermoplastische Kunststoff in den Restabfall-Schnipseln teilweise verflüssigt wird, so dass der Materialstrang eine teigähnliche Konsistenz aufweist;
- Zerschneiden des Materialstrangs in kurze Strangabschnitte mit einer Länge von 1 bis 5 cm;
- Abkühlen der Strangabschnitte in einem Wasserbad (12) und durch strömende Luft so, dass diese erhärten;
- Zerkleinern der abgekühlten Strangabschnitte zu einem Granulat mit einer Korngröße von 6 - 10 mm.

2. Verfahren nach Anspruch 1, **dadurch gekennzeichnet, dass** der Restabfall zu Schnipseln mit einer Größe von 10 bis 15 mm zerkleinert wird

3. Verfahren nach einem der vorhergehenden Ansprüche, **dadurch gekennzeichnet, dass** die Temperatur des Restabfalls aus Getränkekartons während des Agglomerierens zwischen 130°C und 160°C, bevorzugt zwischen 140°C und 150°C beträgt.

4. Verfahren nach einem der vorhergehenden Ansprüche, **dadurch gekennzeichnet, dass** der Materialstrang einen Restfeuchtegehalt von ca. 0 bis 10 Prozent, bevorzugt von ca. 0 bis 2 Prozent hat.

5. Verfahren nach einem der vorhergehenden Ansprüche, **dadurch gekennzeichnet, dass** vor dem Zerkleinern im Restabfall enthaltene Partikel aus Eisen- und Nichteisenmetalle abgeschieden werden.

6. Verfahren nach einem der vorhergehenden Ansprüche, **dadurch gekennzeichnet, dass** die Restabfall-Schnipsel nach dem Zerkleinern zwischengespeichert werden, um sie anschließend in einem kontinuierlichen Stoffstrom zur weiteren Bearbeitung zur Verfügung zu stellen.

7. Verfahren nach einem der vorhergehenden Ansprüche, **dadurch gekennzeichnet, dass** das Granulat homogenisiert und getrocknet wird.

## Claims

1. A method of manufacturing granular material for injection moulding of a moulded component from residual waste, which results when recycling packaging, particularly beverage cartons, and consists substantially of a composite of thermoplastic plastic material and aluminium foil, with the following successive steps:
- comminuting the residual waste into fragments with a size of 5 to 20 mm;
- agglomerating the residual waste fragments at a temperature of between 130 degrees Celsius and 200 degrees Celsius to form a coherent strand of material, wherein the thermoplastic plastic material in the residual waste fragments is partially liquified so that the strand of material has a dough-like consistency;
- cutting the strand of material into short strand sections with a length 1 to 5 cm;
- cooling the strand sections in a water bath (12) and by flowing air so that they solidify;
- comminuting the cooled strand sections to form a granular material with a grain size of 6 - 10 mm.

2. A method as claimed in Claim 1, **characterised in that** the residual waste is comminuted into fragments with a size of 10 to 15 mm.

3. A method as claimed in one of the preceding claims, **characterised in that** the temperature of the residual waste from beverage cartons is between 130°C and 160°C, preferably between 140°C and 150°C, during the agglomeration.

4. A method as claimed in one of the preceding claims, **characterised in that** the strand of material has a residual moisture content of ca. 0 to 10 percent, preferably of ca. 0 to 2 percent.

5. A method as claimed in one of the preceding claims, **characterised in that** particles of ferrous and non-ferrous materials contained in the residual waste are separated out before the comminution.

6. A method as claimed in one of the preceding claims, **characterised in that** the residual waste fragments are temporarily stored after the comminution in order subsequently to make them available in a continuous flow of material for further processing.

7. A method as claimed in one of the preceding claims, **characterised in that** the granular material is homogenised and dried.

## Revendications

1. Procédé de fabrication de granulé pour moulage par injection d'une pièce moulée au départ de déchets résiduels se produisant lors du recyclage d'emballages, en particulier de cartons de boissons et sont composés pour l'essentiel d'un composé de matière synthétique thermoplastique et de feuille d'aluminium, comprenant les étapes suivantes:
- broyage des déchets résiduels en petits morceaux d'une grosseur de 5 à 20 mm;
- agglomération des petits morceaux des déchets résiduels à une température entre 130 degrés Celsius et 200 degrés Celsius en brins de matière continus, la matière synthétique thermoplastique dans les petits morceaux des déchets résiduels étant partiellement liquéfiée pour que les brins de matière présentent une consistance pâteuse;
- découpage des brins de matière en petites sections de brin d'une longueur de 1 à 5 cm;
- refroidissement des sections de brin dans un bain d'eau (12) et par afflux d'air, dans le but de durcir ceux-ci;
- broyage des sections de brin refroidis en granule d'une taille de particule allant de 6 à 10 mm.

2. Procédé selon la revendication 1, **caractérisé en ce que** les déchets résiduels sont broyés en petits morceaux d'une taille de 10 à 15 mm.

3. Procédé selon l'une des revendications précédentes, **caractérisé en ce que** la température des déchets résiduels provenant de cartons de boissons atteint pendant l'agglomération entre 130°C et 160°C, de préférence entre 140°C et 150°C.

4. Procédé selon l'une des revendications précédentes, **caractérisé en ce que** le brin de matière présente une teneur en humidité résiduelle d'environ 0 à 10 pour-cent, de préférence d'environ 0 à 2 pour-cent.

5. Procédé selon l'une des revendications précédentes, **caractérisé en ce que**, avant le broyage, les particules contenues dans les déchets résiduels sont séparées en métaux ferreux et non ferreux.

6. Procédé selon l'une des revendications précédentes, **caractérisé en ce que** les petits morceaux des déchets résiduels sont après le broyage entreposés provisoirement pour ensuite les rendre disponibles à un traitement futur en un flux continu de matière.

7. Procédé selon l'une des revendications précédentes, **caractérisé en ce que** le granulé est homogénéisé et séché.
